# EUROPÄISCHE PATENTANMELDUNG

(11) **EP 4 721 950 A1**
(43) Veröffentlichungstag der Anmeldung: **08.04.2026**
(21) Anmeldenummer: 24203827.1
(22) Anmeldetag: 01.10.2024
(51) Int. Cl.: B29C 48/00, B29C 48/11, B29C 59/00

(54) **VERFAHREN ZUR HERSTELLUNG EINES EXTRUDIERTEN BAHNMATERIALS AUS KUNSTSTOFF, EXTRUDIERTES BAHNMATERIAL UND TRANSPORTGEBINDE**

(71) Anmelder: Gebr. Scheidt GmbH, 32051 Herford (DE)
(72) Erfinder: Scheidt, Markus, 32120 Hiddenhausen (DE)
(74) Vertreter: Ter Meer Steinmeister & Partner

(57) **Zusammenfassung**

Verfahren zur Herstellung eines extrudierten Bahnmaterials (12; 12'; 12") aus Kunststoff, das im Inneren eine Schar paralleler Hohlkammern (14) aufweist, umfassend die Extrusion einer in Laufrichtung (x) der Hohlkammern (14) endlosen Bahn des Bahnmaterials (12; 12'; 12") unter Beaufschlagung der Hohlkammern (14) von innen mit Druckluft, gekennzeichnet durch das Herstellen von quer zur Laufrichtung (x) der Hohlkammern (14) verlaufenden Schwächungslinien (16) in der Bahn durch Einbringung von Rillen (50) in das Bahnmaterial (12), deren Tiefe derart bemessen ist, dass die Hohlkammern (14) durch die Rillen (50) nicht unterbrochen werden.

## Beschreibung

Die vorliegende Erfindung betrifft ein Verfahren zur Herstellung eines extrudierten Bahnmaterials aus Kunststoff, das im Inneren eine Schar paralleler Hohlkammern aufweist. Ferner betrifft die Erfindung ein entsprechendes extrudiertes Bahnmaterial und ein Transportgebinde aus einem derartigen extrudierten Bahnmaterial.

Für verschiedene Anwendungszwecke, beispielsweise für Verpackungen, sind Bahnmaterialien aus Kunststoff bekannt, beispielsweise aus Polypropylen, die eine ähnliche Struktur wie Wellpappe aufweisen, also beispielsweise aus zwei parallelen Außenlagen bestehen, zwischen denen eine gewellte Lage angeordnet ist, die den Zwischenraum zwischen den Außenlagen in eine Schar von Hohlkammern unterteilt. Ein solches Bahnmaterial lässt sich im Extrusionsverfahren rationell als Endlosmaterial herstellen. In einer weiteren Ausführungsform weist das Bahnmaterial ein Profil auf, das einer sogenannten Hohlkammerstegplatte entspricht, in welcher zwei parallele Bahnenlagen durch rechtwinklig auf diesen Bahnenlagen stehende Stege verbunden sind, die die Hohlkammern quer zu deren Erstreckungsrichtung voneinander trennen. Hierbei haben die Hohlkammern ein rechteckiges oder quadratisches Profil.

Die gewellte Lage, oder, allgemeiner, die Stege, die die einzelnen Hohlkammern voneinander trennen, verleihen dem Bahnmaterial in Laufrichtung der Hohlkammern, also in Extrusionsrichtung, eine relativ hohe Biegesteifigkeit, die bei der Verwendung des Materials oder daraus hergestellter Produkte Vorteile bietet, bei der Handhabung und Verarbeitung des Bahnmaterials jedoch Probleme bereiten kann. Hierzu zählen die Lagerung und der Transport des Bahnmaterials. Zur Schaffung eines kompakten Transportgebindes könnte das Bahnmaterial grundsätzlich gewickelt werden, doch hierbei droht die Gefahr einer Beschädigung des Materials, wenn dieses im aufgewickelten Zustand zu stark gebogen wird. Zudem könnte beim Abwickeln des Materials zur weiteren Verarbeitung eine unerwünschte Restkrümmung zurückbleiben.

Es wurde daher erwogen, das Bahnmaterial nach dem Extrusionsvorgang mit Schwächungslinien quer zur Laufrichtung der Endlosbahn bzw. der sich darin erstreckenden Hohlkammern zu versehen und das Material anschließend entlang der Schwächungslinien zickzackförmig zu einem Paket zu falten, in welchem die einzelnen Lagen des Bahnmaterials aufeinandergestapelt sind.

Das Dokument WO2008/070512 A1 offenbart hierzu die Möglichkeit, eine mit Hohlkammern versehene extrudierte Materialbahn durch Einprägungen in Querrichtung zu verformen, um die Schwächungslinien herzustellen und die so gebildeten Bahnabschnitte entlang der Schwächungslinien aufeinander zu falten.

Dieses Verfahren lässt sich jedoch nicht in einem Herstellungsprozess anwenden, in welchem die Hohlkammern während der Extrusion von innen mit Druckluft beaufschlagt werden, um ihre Profilstruktur bis zum Aushärten des Kunststoffmaterials zu erhalten. Fährt dann ein Werkzeug zur Bildung der Schwächungslinien in das Bahnmaterial hinein, besteht die Gefahr, dass die unter Druck stehenden Hohlkammern aufplatzen und die Bahnstruktur an den Schwächungslinien zerstört wird.

Es ist daher eine Aufgabe der vorliegenden Erfindung, das bekannte Verfahren zur Herstellung eines extrudierten Bahnmaterials aus Kunststoff der oben genannten Art derart weiterzubilden, dass die Anbringung von Schwächungslinien im Bahnmaterial ermöglicht wird, ohne dass die Integrität der Hohlkammerstruktur zerstört wird. Eine weitere Aufgabe besteht in der Schaffung eines entsprechenden extrudierten Bahnmaterials aus Kunststoff sowie in der Schaffung eines hieraus gebildeten Transportgebindes.

Diese Aufgaben werden erfindungsgemäß durch ein Verfahren gemäß Anspruch 1, ein extrudiertes Bahnmaterial gemäß Anspruch 14 und ein Transportgebinde gemäß Anspruch 15 gelöst.

Auch das erfindungsgemäße Verfahren sieht die Bildung von Schwächungslinien quer zur Laufrichtung der Hohlkammern vor. Diese werden durch das Einbringen von Rillen in das Bahnmaterial erzeugt. Erfindungsgemäß ist die Tiefe der Rillen derart bemessen, dass die Hohlkammern durch die Rillen nicht unterbrochen werden.

Bei der Herstellung der Rillen wird das Bahnmaterial also nicht in der Weise durchgeprägt, dass einzelne Abschnitte der Hohlkammern in deren Laufrichtung voneinander getrennt werden. Vielmehr kommunizieren die Hohlkammer-Abschnitte vor und hinter einer Rille miteinander, so dass ein Druckausgleich entlang der gesamten Länge der Hohlkammer stattfinden kann.

Die Luft kann somit in der Erstreckungsrichtung der Hohlkammern ausweichen, wenn das Werkzeug zur Bildung der Rillen in die Materialbahn einfährt und diese verformt. Ein Aufplatzen der Hohlkammern wird hierdurch verhindert. Die Hohlkammern werden zwar an den Schwächungslinien gestaucht, diese Stauchung stellt jedoch keine unakzeptable Beeinträchtigung der Integrität der Hohlkammerprofile dar.

Nach der Bildung der Rillen lässt sich das extrudierte Bahnmaterial problemlos entlang der Rillen falten und beispielsweise zu einem paketförmigen Transportgebinde zusammenlegen. Auch andere Verwendungen sind denkbar, wie etwa die Faltung des Bahnmaterials entlang der Rillen zu einem kastenförmigen Korpus oder dergleichen.

Vorzugsweise werden die Rillen durch mechanische Einwirkung, durch thermische Einwirkung oder durch eine Kombination aus mechanischer und thermischer Einwirkung erzeugt.

Weiter vorzugsweise werden die Rillen durch einen Rillkörper eingeprägt.

Gemäß einer weiteren Ausführungsform werden die Rillen durch einen Druckluftstrahl erzeugt.

Gemäß einer weiteren Ausführungsform werden die Rillen durch einen Laserstrahl oder einen Wärmestrahl erzeugt werden. Ein solcher Wärmestrahl kann beispielsweise ein Infrarot-Wärmestrahl sein.

Vorzugsweise beträgt die Tiefe der Rillen etwa zwei Drittel der Dicke des Bahnmaterials.

Vorzugsweise sind die Rillen abwechselnd auf entgegengesetzten Seiten des Bahnmaterials erzeugt. Eine solche Prägung ist zur nachfolgenden zickzackförmigen Faltung des Bahnmaterials zu einem Paket von Vorteil.

Weiter vorzugsweise werden die Schwächungslinien hergestellt, während sich das extrudierte Bahnmaterial fortlaufend in der Laufrichtung weiterbewegt.

Weiter vorzugsweise wird zumindest ein Werkzeug zum Herstellen der Schwächungslinien synchron mit dem Bahnmaterial in der Laufrichtung mitbewegt.

Gemäß einer bevorzugten Ausführungsform wird das Werkzeug zum Herstellen der Schwächungslinien schräg über das Bahnmaterial geführt, wobei eine Geschwindigkeitskomponente dieser schrägen Bewegung in der Laufrichtung gleich der Geschwindigkeit des Bahnmaterials ist. Hierdurch wird das Werkzeug in der Laufrichtung synchron mit dem Bahnmaterial bewegt, während es gleichzeitig in einer Richtung senkrecht dazu quer über die Bahn geführt wird, um die Rille einzubringen. Denkbar ist beispielsweise eine Führung des Werkzeugs entlang mindestens einer Schiene, die sich schräg, also z.B. diagonal über die Materialbahn hinweg erstreckt.

Gemäß einer bevorzugten Ausführungsform der vorliegenden Erfindung werden die Schwächungslinien mit Hilfe zumindest eines Rillbalkens hergestellt, der sich über die gesamte Breite des Bahnmaterials erstreckt.

Der Rillbalken kann vorzugsweise am Umfang einer drehbaren Trommel angeordnet sein, die zum Herstellen der Schwächungslinie in eine Position gedreht wird, in welcher der Rillbalken der Materialbahn zugewandt ist. Durch eine Rotation der Trommel synchron zur Bewegung der Materialbahn in Laufrichtung kann sich dann der Rillbalken der Materialbahn seitlich nähern, in diese während der weiteren Drehung der Trommel zur Bildung der Rille einfahren, ohne diese durchzuprägen, um sich während der weiteren Drehung wieder von der Materialbahn zu entfernen. Denkbar ist zudem, dass die drehbare Trommel, die den Rillbalken trägt, mittels einer Hubeinrichtung anhebbar und absenkbar ist. Wenn eine Schwächungslinie hergestellt werden soll, wird die Trommel in eine Winkelposition gedreht, in der der Rillbalken der Materialbahn zugewandt ist und die Trommel wird kurz abgesenkt, um die Rille in die Materialbahn zu drücken. Anschließend wird die Trommel wieder angehoben, so dass die Materialbahn wieder freigegeben wird. Der Vorteil dieser Ausführungsform liegt darin, dass keine synchrone Rotation der Trommel in Bezug auf den Lauf der Materialbahn erforderlich ist.

Eine weitere Ausführungsform des erfindungsgemäßen Verfahrens umfasst zusätzlich den Schritt des zickzackförmigen Faltens der Bahn an den Schwächungslinien zu einem Paket aus mehreren übereinanderliegenden Tafeln.

Die Erfindung betrifft ferner ein extrudiertes Bahnmaterial aus Kunststoff, das im Inneren eine Schar paralleler Hohlkammern aufweist, eine in Laufrichtung der Hohlkammern endlose Bahn bildet und quer zur Laufrichtung der Hohlkammern verlaufende Schwächungslinien in der Bahn aufweist, die durch in das Bahnmaterial eingeprägte Rillen gebildet sind, deren Tiefe derart bemessen ist, dass die Hohlkammern durch die Rillen nicht unterbrochen werden.

Die Erfindung betrifft ferner ein Transportgebinde eines extrudierten Bahnmaterials der vorstehend genannten Art, welches dadurch gebildet ist, dass die Bahn an den Schwächungslinien zickzackförmig zu einem Paket gefaltet ist.

Im Folgenden werden bevorzugte Ausführungsformen der vorliegenden Erfindung anhand der Zeichnung näher erläutert.
- Fig. 1: zeigt eine perspektivische Ansicht eines erfindungs-gemäßen Transportgebindes;
- Fig. 2 und 2A: zeigen schematische Ansichten von Vorrichtungen zur Herstellung des Transportgebindes nach Fig. 1;
- Fig. 3 und 4: sind Prinzipskizzen alternativer Vorrichtungen zur Herstellung des Transportgebindes;
- Fig. 5 bis 7: zeigen Beispiele für Profilformen von Bahnmaterialien, aus denen die erfindungsgemäßen Transportgebinde bestehen können;
- Fig. 8: zeigt schematisch einen Querschnitt durch eine Materialbahn mit einem Profilform entsprechend Fig. 7 entlang der Laufrichtung im Bereich einer Schwächungslinie; und
- Fig. 9: zeigt schematisch einen Querschnitt durch die Materialbahn aus Fig. 8 im gefalteten Zustand.

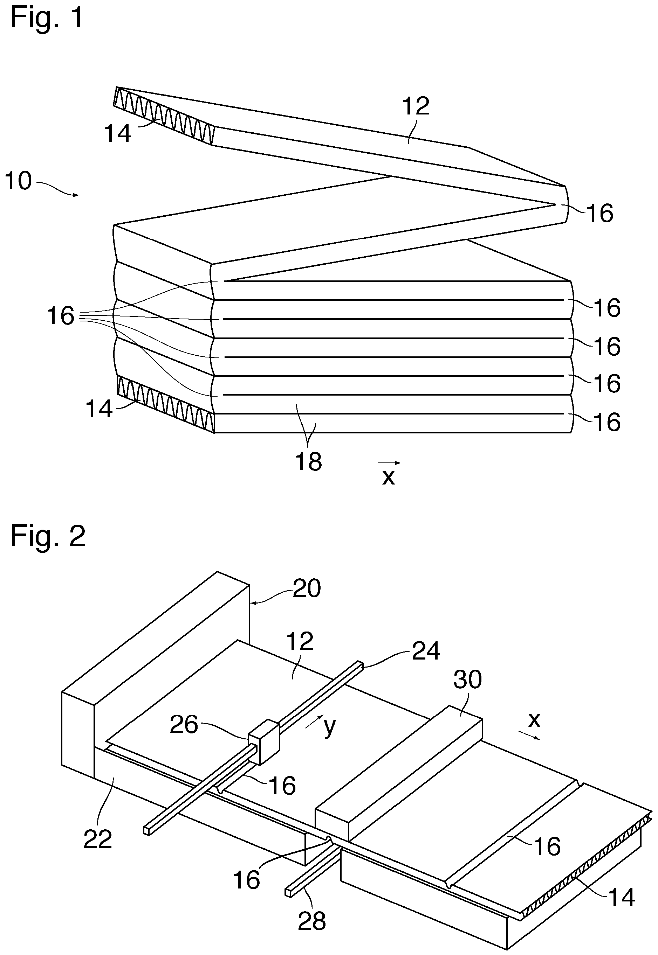

In Fig. 1 ist ein Transportgebinde 10 gezeigt, das aus mehreren Lagen eines endlosen Bahnmaterials 12 aus Kunststoff besteht, beispielsweise aus Polypropylen. Die Darstellung in Fig. 1 und auch in den übrigen Figuren ist nicht maßstäblich, insbesondere in Bezug auf die Verhältnisse der Breite, Dicke und Länge der einzelnen Lagen zueinander.

Das Bahnmaterial 12 wurde im Extrusionsverfahren hergestellt und weist im Inneren eine Schar pa-ralleler Hohlkammern 14 auf, deren offene Enden in Fig. 1 an der Kante der untersten und der obersten Lage zu sehen sind. Die Laufrichtung x der Hohlkammern 14 ist in Fig. 1 durch einen Pfeil angegeben und entspricht der Extrusionsrichtung bei der Herstellung des endlosen Stranges.

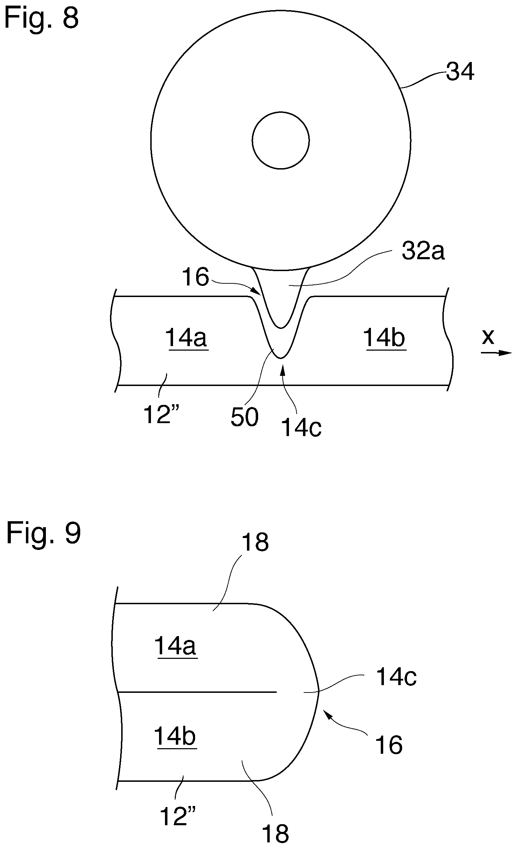

In regelmäßigen Abständen ist der endlose Strang des Bahnmaterials 12 durch Schwächungslinien 16 geschwächt worden, die den Strang in einzelne Tafeln 18 unterteilen. Die Schwächungslinien 16 sind dadurch hergestellt worden, dass an der betreffenden Stelle des Strangs Rillen in das Bahnmaterial 12 eingebracht werden, beispielsweise durch Rillen oder Einprägen. Das Bahnmaterial 12 wird allerdings hierbei nicht vollständig durchgeprägt in dem Sinn, dass die Hohlkammern 14 in der Laufrichtung x unterbrochen und in einzelne Abschnitte getrennt werden, deren Innenräume nicht mehr miteinander kommunizieren. Vielmehr ist die Tiefe der Rillen derart bemessen, dass die Hohlkammern 14 durch die Rillen nicht unterbrochen werden. Insofern auch ist die Darstellung der Schwächungslinien 16 in Fig. 1 lediglich schematisch zu verstehen. Ihre Struktur soll genauer anhand von Fig. 8 und 9 verdeutlicht werden.

Durch die Anbringung der Schwächungslinien 16 verliert das Material lokal seine Biegesteifigkeit. Auf diese Weise kann die endlose Bahn des Bahnmaterials 12 (nachfolgend auch kurz als Materialbahn bezeichnet) entlang der Schwächungslinien 16 zickzackförmig gefaltet und zu einem Paket zusammengelegt werden, wie in Fig. 1 gezeigt ist. In diesem Paket liegen die Tafeln 18, die jeweils durch zwei aufeinanderfolgende Schwächungslinien 16 begrenzt werden, bündig aufeinander. Aus Gründen der Deutlichkeit sind die beiden obersten Lagen in Fig. 1 im noch nicht vollständig zusammengelegten Zustand gezeigt.

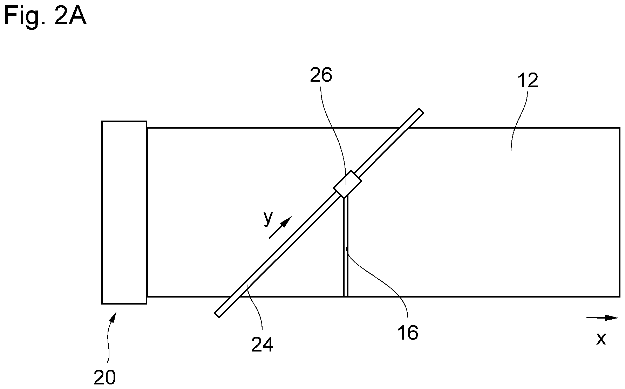

Mögliche Verfahren zur Herstellung des Transportgebindes gemäß Fig. 1 sollen nachstehend anhand der Fig. 2 bis 4 erläutert werden.

In Fig. 2 ist schematisch eine Extrusionsanlage 20 gezeigt, mit der eine Bahn des Bahnmaterials 12 als endloser Strang extrudiert wird. Während dieser Extrusion werden die Hohlkammern 14 im Inneren des Bahnmaterials 12 mit Druckluft beaufschlagt, so dass sie bis zum Aushärten des Kunststoffs ihre Profilstruktur beibehalten.

Der frisch extrudierte Strang ist auf einem Bett 22 abgestützt, über das sich quer zur Laufrichtung x der Hohlkammern 14 eine Schiene 24 erstreckt, auf der ein Rillwerkzeug 26 verfahrbar ist. Das Rillwerkzeug 26 weist eine nicht näher gezeigte Rolle auf, die eine die Schwächungslinie 16 bildende Rille in die Oberseite des Bahnmaterials 12 drückt. In Fig. 2 bewegt sich das Rillwerkzeug 26 in Richtung eines Pfeils y über die Materialbahn, so dass erst ein Teil der Schwächungslinie 16 fertiggestellt ist.

Weiter stromabwärts ist eine weitere Führungsschiene 28 mit einem dem Rillwerkzeug 26 entsprechenden (nicht erkennbaren) Rillwerkzeug an der Unterseite der Materialbahn in einer Lücke des Bettes 22 angeordnet, und oberhalb der Führungsschiene 28 wird die Oberseite der Materialbahn durch ein Widerlager 30 abgestützt, so dass mit Hilfe dieses Rillwerkzeugs eine weitere Schwächungslinie 16 in die Unterseite der Materialbahn gerillt werden kann. Weiter rechts in Fig. 2 erkennt man eine weitere Schwächungslinie 16, die zu einem früheren Zeitpunkt mit Hilfe des Rillwerkzeugs 26 in der Oberseite der Bahn hergestellt wurde.

Vorzugsweise erfolgt die Herstellung der Schwächungslinien kurz hinter der Extrusionsanlage 20 zu einem Zeitpunkt, zu dem das Kunststoffmaterial der Materialbahn 12 noch nicht vollständig erstarrt ist, so dass sich die Stege zwischen den einzelnen Hohlkammern 14 leicht verformen lassen. Während die Rillen im hier gezeigten Ausführungsbeispiel durch ein Rillwerkzeug 26, also durch mechanische Einwirkung erzeugt werden, kommt in Betracht, die Rillen durch thermische Einwirkung oder durch eine Kombination aus mechanischer und thermischer Einwirkung zu erzeugen. Denkbar ist die Erzeugung der Rillen durch einen Druckluftstrahl, durch einen Laserstrahl oder einen Infrarot-Wärmestrahl. Die vorstehend genannten Möglichkeiten sind hierbei beliebig kombinierbar.

Bei hinreichend kleiner Extrusionsgeschwindigkeit können die Rillwerkzeuge 26 so schnell über die Materialbahn bewegt werden, dass der Extrusionsprozess nicht unterbrochen zu werden braucht. Bei einer anderen Verfahrensvariante wird das Bahnmaterial 12 intermittierend extrudiert, so dass die Materialbahn nach jedem Extrusionsschritt kurz angehalten wird, während sich die Rillwerkzeuge (vorzugsweise gleichzeitig) über die Materialbahn bewegen. In einer weiteren Ausführungsform ist es auch möglich, die Führungsschienen 24 derart beweglich und antreibbar zu lagern, dass sie sich synchron mit der Materialbahn 12 mitbewegen können. In dem Fall sollten die Breite des Widerlagers 30 und die Breite der entsprechenden Lücke im Bett 22 größer sein als der Weg, den das Rillwerkzeug 26 in der Laufrichtung x zurücklegt.

Fig. 2A zeigt eine Ausführungsform, in der ähnlich wie in Fig. 2 ein Rillwerkzeug 26 entlang einer Führungsschiene 28 über die Oberseite des Bahnmaterials 12 geführt wird in einer Draufsicht. Auch hier weist das Rillwerkzeug 26 eine nicht näher gezeigte Rolle auf, die eine die Schwächungslinie 16 bildende Rille in die Oberseite des Bahnmaterials 12 drückt. In Fig. 2A bewegt sich das Rillwerkzeug 26 in Richtung eines Pfeils y schräg über die Materialbahn, d.h. seine Bewegungsrichtung y schließt einen Winkel mit der Laufrichtung x des Bahnmaterials 12 und der Querrichtung (senkrecht zur Laufrichtung x) ein. Im vorliegenden Fall beträgt der Winkel zwischen der Bewegungsrichtung y des Rillwerkzeugs 26 (entsprechend der Erstreckungsrichtung der Führungsschiene 28) und der Laufrichtung 45°, d.h. die Führungsschiene 28 erstreckt sich diagonal über die Materialbahn. Im Rahmen der Erfindung kann auch ein anderer Winkel gewählt werden.

Die Bewegung des Rillwerkzeugs 26 entlang der Führungsschiene 28 in der Bewegungsrichtung y weist eine Geschwindigkeitskomponente in der Laufrichtung x des Bahnmaterials 12 und in der Richtung senkrecht dazu quer über die Materialbahn auf. Hierbei ist die Geschwindigkeitskomponente in der Laufrichtung x gleich der Geschwindigkeit des Bahnmaterials, d.h. diese Geschwindigkeiten des Bahnmaterials 12 und des Rillwerkzeugs 26 sind in der Laufrichtung x synchronisiert. Während seiner Bewegung entlang der Führungsschiene 28 bewegt sich das Rillwerkzeug 26 in der Laufrichtung x synchron zum Bahnmaterial 12 und gleichzeitig vollständig quer über dieses hinweg. Das Rillwerkzeug 26 selbst kann entsprechend der Ausführungsform in Fig. 2 ausgebildet sein. Zur Führung des Rillwerkzeugs 26 können alternative Möglichkeiten vorgesehen sein, wie etwa eine Mehrzahl paralleler Führungsschienen 28 oder andere Arten von Führungen, die eine synchrone Steuerung von Rillwerkzeug 26 und Bahnmaterial 12 in der beschriebenen Weise gestatten. In einer anderen Ausführungsform werden die Schwächungslinien 16 mit Hilfe von Rillbalken hergestellt, die sich über die gesamte Breite der Materialbahn 12 erstrecken, so dass die komplette Schwächungslinie auch bei sehr breiten Materialbahnen in einem sehr kurzen Bearbeitungsschritt hergestellt werden kann.

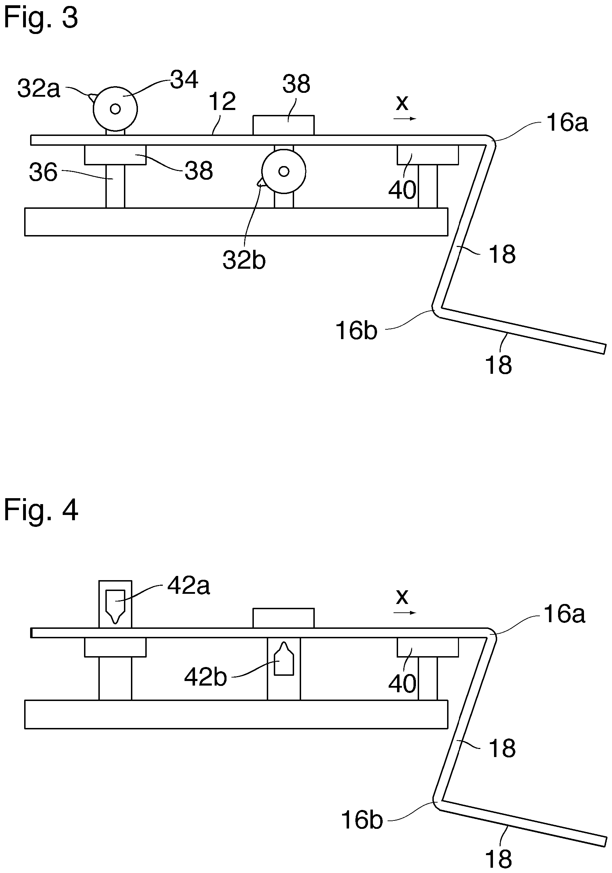

Fig. 3 zeigt eine Ausführungsform, bei der ein Rillbalken 32a am Umfang einer Trommel 34 gebildet ist, die drehbar dicht oberhalb des Strangs des Bahnmaterials 12 (also der Materialbahn) angeordnet ist. Im gezeigten Beispiel ist die Trommel 34 zudem mit Hilfe einer Hubeinrichtung 36 anhebbar und absenkbar. Wenn eine Schwächungslinie 16 hergestellt werden soll, wird die Trommel 34 in eine Winkelposition gedreht, in der der Rillbalken 32a der Materialbahn zugewandt ist, und die Trommel 34 wird kurz abgesenkt, um die Rille in das Bahnmaterial 12 zu prägen. Anschließend wird die Trommel wieder angehoben, so dass die Materialbahn wieder freigegeben wird.

Der gesamte Vorgang kann in so kurzer Zeit ausgeführt werden, dass die Extrusion der Materialbahn 12 nicht unterbrochen zu werden braucht, zumal die Umfangsgeschwindigkeit der Trommel 34 mit der Bahngeschwindigkeit synchronisiert sein kann. Alternativ ist es jedoch auch möglich, die Trommel 34 und ein ihr gegenüberliegendes Widerlager 38 synchron mit der Materialbahn 12 mitzubewegen. In noch einer anderen Ausführungsform kann der Umfang der Trommel 34 so groß sein, dass er der Länge zwischen zwei aufeinanderfolgenden Schwächungslinien auf derselben Seite der Materialbahn entspricht. Die Trommel 34 kann man unmittelbar auf der Materialbahn abrollen, und die Schwächungslinie wird hergestellt, wenn der Rillbalken 32a die Position durchläuft, an welcher die Trommel 34 an der Materialbahn anliegt.

Fig. 3 zeigt weiterhin eine zweite Anordnung aus einem Rillbalken 32b und einem Widerlager 38, die in umgekehrter Position an die Materialbahn angeordnet sind, um eine Rille in die Unterseite der Materialbahn zu prägen.

Noch weiter stromabwärts wird die Materialbahn 12 auf einem Tisch 40 abgestützt.

In dem in Fig. 3 gezeigten Zustand hat gerade eine Schwächungslinie 16a, die mit Hilfe des ersten Rillbalkens 32a in der Oberseite der Materialbahn gebildet wurde, das Ende des Tisches 40 passiert, so dass der jenseits dieser Schwächungslinie 16a gelegene Teil der Materialbahn nach unten abkippt, wie in Fig. 3 zu erkennen ist. Zu einem früheren Zeitpunkt ist in diesem Abschnitt mit Hilfe des zweiten (unteren) Rillbalkens 32b eine Schwächungslinie 16b in der Unterseite der Materialbahn gebildet worden. An dieser Schwächungslinie kann die Materialbahn in der entgegengesetzten Richtung abgewinkelt werden. Auf diese Weise kann die endlose Bahn am Ausgang des Tisches 40 leporelloartig (oder zickzackförmig) gefaltet und zu dem in Fig. 1 gezeigten Transportgebinde 10 zusammengelegt.

Fig. 4 zeigt eine abgewandelte Ausführungsform, bei der anstelle der drehbaren Trommel 34 hubbewegliche Rillbalken 42a, 42b vorgesehen sind.

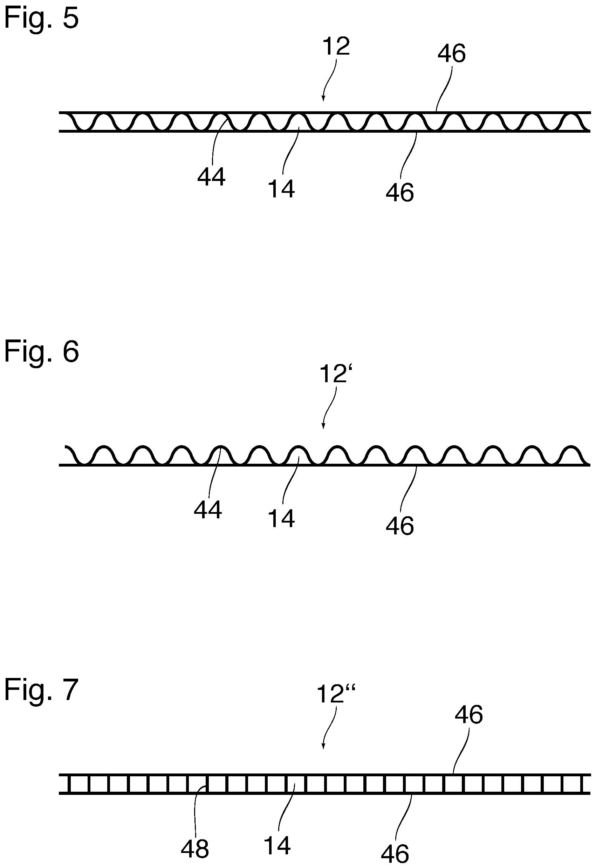

Fig. 5 zeigt einen vergrößerten Querschnitt der Bahn des Bahnmaterials 12, so dass die Struktur der Hohlkammern 14 deutlicher zu erkennen ist. Bei dem hier gezeigten Profil des Bahnmaterials 12 ist eine einzelne Wellenlage 44, die die Hohlkammern 14 bildet, zwischen zwei glatten äußeren Bahnlagen 46 angeordnet.

Fig. 6 zeigt eine Bahn des Bahnmaterials 12' mit einem anderen möglichen Profil, bei dem eine der glatten Bahnlagen 46 fortgelassen ist.

Fig. 7 zeigt als weiteres Beispiel einer Bahn des Bahnmaterials 12" mit einen Profil, das einer sogenannten Hohlkammerstegplatte entspricht, mit zwei parallelen Bahnlagen 46, die durch rechtwinklig auf diesen Bahnlagen stehende Stege 48 verbunden sind, die die Hohlkammern 14 voneinander trennen. In diesem Beispiel haben somit die Hohlkammern 14 ein rechteckiges oder quadratisches Profil.

Fig. 8 zeigt einen Querschnitt durch die Bahn des Bahnmaterials 12" aus Fig. 7 aus einer anderen Querschnittsrichtung, wobei der Querschnitt längs einer Hohlkammer 14 entlang der Laufrichtung x erfolgt. Diese Figur zeigt somit einen Schnitt entlang einer einzigen Hohlkammer 14 des Bahnmaterials 12" in einem Bereich, in welchem eine Schwächungslinie 16 in der Bahn hergestellt wird. Dies geschieht durch Einprägen einer Rille 50 in das Bahnmaterial 12" mittels eines Rillbalkens 32a, der am Umfang einer Trommel 34 angebracht ist, gemäß dem Ausführungsbeispiel aus Fig. 3.

Die Hohlkammern 14 des Bahnmaterials 12" werden hierbei eingedrückt und gestaucht. Ihr in Fig. 7 dargestellter Querschnitt wird hierbei verformt, allerdings wird die Hohlkammer 14 nicht unterbrochen. Vielmehr bleiben ein (bezogen auf die Laufrichtung x) stromaufwärts des Rillwerkzeugs 32a gelegener Abschnitt 14a der Hohlkammer 14 und ein stromabwärts des Rillwerkzeugs 32a gelegener Abschnitt 14b derselben Hohlkammer 14 an einem gestauchten Bereich 14c an der Stelle der Schwächungslinie 16 miteinander derart verbunden, dass die beiden Abschnitte 14a und 14b miteinander kommunizieren. Die Tiefe der Einprägung der Rille 50 entspricht etwa zwei Dritteln der Dicke des Bahnmaterials 12".

Steht die Hohlkammer 14 unter Druck, wie es bei dem Extrusionsverfahren im Rahmen der vorliegenden Erfindung der Fall ist, kann während des Einprägens der Rille 50 der Druck entlang der Erstreckung des gesamten, nicht durch Rillen unterbrochenen Hohlkammerprofils ausweichen. Ein Aufplatzen der Hohlkammer 14 und eine damit verbundene Zerstörung der Integrität des Profils des Bahnmaterials 12" wird vermieden.

Fig. 9 zeigt einen Querschnitt durch die Bahn des Bahnmaterials 12" aus Fig. 8 in einem Zustand, in welchem die in der Laufrichtung x aufeinanderfolgenden Abschnitte 14a und 14b der Hohlkammer 14 nach Bildung der Rille 50 entlang der hierdurch gebildeten Schwächungslinie 16 aufeinander gefaltet sind, wie es etwa in dem Transportgebinde 10 in Fig. 1 der Fall ist. Diese Abschnitte 14a und 14b sind dann aufeinander liegenden Tafeln 18 zugeordnet.

## Patentansprüche

1. Verfahren zur Herstellung eines extrudierten Bahnmaterials (12; 12'; 12") aus Kunststoff, das im Inneren eine Schar paralleler Hohlkammern (14) aufweist, umfassend die Extrusion einer in Laufrichtung (x) der Hohlkammern (14) endlosen Bahn des Bahnmaterials (12; 12'; 12") unter Beaufschlagung der Hohlkammern (14) von innen mit Druckluft,
**gekennzeichnet durch** das Herstellen von quer zur Laufrichtung (x) der Hohlkammern (14) verlaufenden Schwächungslinien (16) in der Bahn durch Einbringung von Rillen (50) in das Bahnmaterial (12), deren Tiefe derart bemessen ist, dass die Hohlkammern (14) durch die Rillen (50) nicht unterbrochen werden.

2. Verfahren nach Anspruch 1, **dadurch gekennzeichnet, dass** die Rillen (50) durch mechanische Einwirkung, durch thermische Einwirkung oder durch eine Kombination aus mechanischer und thermischer Einwirkung erzeugt werden.

3. Verfahren nach Anspruch 2, **dadurch gekennzeichnet, dass** die Rillen (50) durch einen Rillkörper eingeprägt werden.

4. Verfahren nach Anspruch 2, **dadurch gekennzeichnet, dass** die Rillen (50) durch einen Druckluftstrahl erzeugt werden.

5. Verfahren nach Anspruch 2, **dadurch gekennzeichnet, dass** die Rillen (50) durch einen Laserstrahl oder einen Wärmestrahl erzeugt werden.

6. Verfahren nach einem der vorhergehenden Ansprüche, **dadurch gekennzeichnet, dass** die Tiefe der Rillen (50) etwa zwei Drittel der Dicke des Bahnmaterials (12) beträgt.

7. Verfahren nach einem der vorhergehenden Ansprüche, **dadurch gekennzeichnet, dass** die Rillen (50) abwechselnd auf entgegengesetzten Seiten des Bahnmaterials (12) erzeugt werden.

8. Verfahren nach einem der vorhergehenden Ansprüche, **dadurch gekennzeichnet, dass** die Schwächungslinien (16) hergestellt werden, während sich das extrudierte Bahnmaterial (12) fortlaufend in der Laufrichtung (x) weiterbewegt.

9. Verfahren nach Anspruch 8, **dadurch gekennzeichnet, dass** zumindest ein Werkzeug (26; 32a, 32b; 42a, 42b) zum Herstellen der Schwächungslinien (16) synchron mit dem Bahnmaterial (12) in der Laufrichtung (x) mitbewegt wird.

10. Verfahren nach Anspruch 9, **dadurch gekennzeichnet, dass** das Werkzeug (26; 32a, 32b; 42a, 42b) zum Herstellen der Schwächungslinien (16) schräg über das Bahnmaterial (12) geführt wird, wobei eine Geschwindigkeitskomponente dieser schrägen Bewegung in der Laufrichtung (x) gleich der Geschwindigkeit des Bahnmaterials (12) ist.

11. Verfahren nach einem der Ansprüche 1 bis 9, **dadurch gekennzeichnet, dass** die Schwächungslinien (16) mit Hilfe zumindest eines Rillbalkens (32a, 32b; 42a, 42b) hergestellt werden, der sich über die gesamte Breite des Bahnmaterials (12) erstreckt.

12. Verfahren nach Anspruch 11, **dadurch gekennzeichnet, dass** der Rillbalken (32a, 32b) jeweils am Umfang einer drehbaren Trommel (34) angeordnet ist, die zum Herstellen der Schwächungslinie (16) in eine Position gedreht wird, in welcher der Rillbalken (32a, 32b) der Bahn des Bahnmaterials (12; 12'; 12") zugewandt ist.

13. Verfahren zur Herstellung eines Transportgebindes eines extrudierten Bahnmaterials (12; 12'; 12") aus Kunststoff, umfassend die Schritte des Verfahrens gemäß einem der Ansprüche 1 bis 12 und einen Schritt des zickzackförmigen Faltens der Bahn an den Schwächungslinien (16) zu einem Paket aus mehreren übereinander liegenden Tafeln (18).

14. Extrudiertes Bahnmaterial (12; 12'; 12") aus Kunststoff, das im Inneren eine Schar paralleler Hohlkammern (14) aufweist, eine in Laufrichtung (x) der Hohlkammern (14) endlose Bahn bildet und quer zur Laufrichtung (x) der Hohlkammern (14) verlaufende Schwächungslinien (16) in der Bahn aufweist, die durch in das Bahnmaterial (12) eingeprägte Rillen (50) gebildet sind, deren Tiefe derart bemessen ist, dass die Hohlkammern (14) durch die Rillen (50) nicht unterbrochen werden.

15. Transportgebinde (10) eines extrudierten Bahnmaterials (12; 12'; 12") nach Anspruch 14, welches dadurch gebildet ist, dass die Bahn an den Schwächungslinien (16) zickzackförmig zu einen Paket gefaltet ist.
